(19) Europäisches Patentamt
European Patent Office
Office européen des brevets

(11) Numéro de publication: **0 683 134 A1**

(12) **DEMANDE DE BREVET EUROPEEN**

(21) Numéro de dépôt: **95401160.7**

(51) Int. Cl.⁶: **C01B 17/94**

(22) Date de dépôt: **19.05.95**

(30) Priorité: **20.05.94 FR 9406199**

(43) Date de publication de la demande: **22.11.95 Bulletin 95/47**

(84) Etats contractants désignés: **AT BE CH DE DK ES FR GB GR IE IT LI LU MC NL PT SE**

(71) Demandeur: **RHONE-POULENC CHIMIE**
**25, Ouai Paul Doumer**
**F-92408 Courbevoie Cédex (FR)**

(72) Inventeur: **Lambert, Yves**
**16, Grand Chatel**
**DF-01120 Dagneux (FR)**
Inventeur: **Ortega, Jean-Luc**
**Les Auches Charbieux**
**F-07340 Bogy (FR)**

(74) Mandataire: **Delenne, Marc**
**Rhône-Poulenc Chimie**
**Direction Propriété Industrielle**
**25, quai Paul Doumer**
**F-92408 Courbevoie Cédex (FR)**

(54) **Procédé de traitement destiné à réduire la teneur en azote minéral de solutions d'acide sulfurique.**

(57) L'invention a pour objet un procédé de traitement, destiné à réduire la teneur en azote minéral d'une solution résiduaire d'acide sulfurique, consistant à ajouter à ladite solution un alcool organique mono- ou polyhydroxylé à chaîne hydrocarbonée en $C_3$-$C_8$, de façon à réduire tout ou partie des substances résiduelles minérales azotées, solubilisées dans la solution d'acide sulfurique, ledit procédé étant caractérisé en ce que la réduction est effectuée sans apport extérieur de chaleur.

EP 0 683 134 A1

La présente invention concerne un procédé de traitement de solutions d'acide sulfurique contenant des quantités résiduelles d'azote minéral.

Plus précisément le procédé de l'invention a pour but de réduire la teneur en azote minéral desdites solutions d'acide sulfurique en vue de leur recyclage éventuel.

De nombreux procédés chimiques de synthèse utilisent des solutions d'acides sulfuriques concentrées. Dans certains cas les acides résiduaires récupérés en fin de procédé contiennent des quantités non négligeables d'azote minéral, sous la forme de substances azotées minérales présentant un atome d'azote à l'état d'oxydation +III ou +V. C'est notamment le cas des acides résiduaires rencontrés dans les procédés de nitration.

Comme exemples de telles substances azotées minérales on peut citer l'acide nitrique ($HNO_3$), l'anhydride nitreux ($N_2O_3$), l'acide nitreux ($HNO_2$) ou bien l'acide nitrosyl-sulfurique ($HSO_3$-ONO).

La régénération de ces acides de récupérations peut passer par la combustion des acides résiduaires en question.

Toutefois la combustion directe desdits acides résiduaires pose de nombreux problèmes dans les ateliers de régénération concernés. On constate en effet en cours de combustion le dégagement d'importantes fumées d'oxyde d'azote à taux bien trop élevé en oxyde nitreux ($N_2O$). Cette étape de combustion s'accompagne par ailleurs d'une dégradation de la qualité de l'acide de production.

En vue de contourner ces problèmes, on a proposé le traitement préalable des acides résiduaires en vue d'éliminer l'essentiel des résidus d'azote minéral qu'ils contiennent.

Pour ce faire la réduction de l'azote minéral, contenu dans les solutions résiduaires d'acide sulfurique a été envisagée par de nombreux auteurs. Parmi les principales espèces réductrices proposées pour la réduction on compte l'urée et l'acide sulfamique.

Toutefois, la cinétique de la réaction de réduction est généralement trop lente. D'autre part on a pu constater une mauvaise solubilisation des substances réductrices dans les solutions d'acide résiduaire à température ambiante, d'où la nécessité d'opérer à température élevée.

Les recherches se sont également orientées vers l'utilisation d'alcools organiques et principalement le méthanol, en tant que substances réductrices. Le procédé global mis au point dans l'art antérieur met en jeu cependant des conditions opératoires particulièrement sévères et notamment une température réactionnelle supérieure à 130°C. Il va sans dire que de telles conditions nécessitent l'utilisation de matériel sophistiqué, les installations devant pouvoir résister à la corrosion, dans ces conditions réactionnelles extrêmes.

Une solution à ces différents problèmes, conjuguant efficacité et conditions réactionnelles modérées, était donc encore à mettre au point.

L'invention répond à ce besoin de l'état de la technique, en fournissant un procédé de traitement permettant la réduction de la teneur en azote minéral de solutions résiduaires d'acide sulfurique dans des conditions opératoires très douces, à savoir sans apport extérieur de chaleur.

De fait l'invention a pour objet un procédé de traitement, destiné à réduire la teneur en azote minéral d'une solution résiduaire d'acide sulfurique, consistant à ajouter à ladite solution un alcool organique mono- ou poly-hydroxylé, à chaîne hydrocarbonée en $C_3$-$C_8$, de façon à réduire tout ou partie des substances résiduelles minérales azotées solubilisées dans la solution d'acide sulfurique, ledit procédé étant caractérisé en ce que la réduction est effectuée sans apport extérieur de chaleur.

Le procédé de l'invention permet le traitement de solutions résiduaires d'acide sulfurique de provenance variée contenant des quantités résiduelles d'azote minéral sous la forme de substances minérales azotées solubilisées dans la solution d'acide sulfurique. Dans ces substances minérales azotées le degré d'oxydation de l'azote est +III ou +V. On citera par exemple, l'acide nitrique ($HNO_3$), l'acide nitreux ($HNO_2$), l'acide nitrosyl-sulfurique ($HSO_3$-ONO), étant entendu que les solutions résiduaires d'acide sulfurique traitées peuvent contenir un mélange de ces acides dans des proportions quelconques.

Le procédé de l'invention est particulièrement indiqué dans le cas où les substances résiduelles minérales azotées solubilisées dans la solution résiduaire d'acide sulfurique consistent essentiellement en un mélange d'acide nitrique et de substances minérales azotées présentant un atome d'azote à l'état d'oxydation +III dans des proportions quelconques, le cas où la proportion d'acide nitrique ou la proportion de substances minérales présentant un azote à l'état d'oxydation +III est nulle n'étant pas exclu.

Comme exemples de solutions résiduaires d'acide sulfurique on citera les solutions d'acide sulfurique récupérées à l'issue de procédés de nitration.

Les solutions résiduaires traitées selon le procédé de l'invention présentent généralement une teneur en $H_2SO_4$ comprise entre 20 et 95%, par exemple 50 à 95% et de préférence 55 à 90%.

L'efficacité du procédé de traitement de l'invention est excellente. On a pu montrer notamment que, pour une teneur initiale en azote minéral de la solution d'acide sulfurique inférieure à 20 g par kg de

solution, l'efficacité du procédé varie entre 85% et 100%, une efficacité de 100% étant obtenue lorsque la teneur en substances azotées de la solution acide est nulle après traitement.

De même on à pu remarquer que pour des solutions d'acide sulfurique contenant essentiellement de l'acide nitrique comme substance minérale azotée solubilisée, une efficacité de 90-100% a pu être obtenue pour une teneur initiale en acide nitrique égale ou inférieure à 90 g par kg de solution acide. Par ailleurs lorsque la solution acide contient essentiellement des substances minérales azotées présentant un atome d'azote à l'état d'oxydation +III, la teneur en substances minérales azotées exprimé en quantité équivalente d'acide nitreux peut atteindre 60 g par kg de solution acide, l'efficacité du procédé restant supérieure à 85%.

Dans le procédé de l'invention l'alcool organique joue le rôle de réducteur. Selon l'invention l'alcool organique est un alcool mono- ou poly-hydroxylé, à chaîne hydrocarbonée en $C_3$-$C_8$.

Un groupe préféré d'alcools organiques est constitué des alcools de formule R-OH dans laquelle R représente une chaîne alkyle en ($C_3$-$C_5$) linéaire ou ramifiée. Sont particulièrement préférés les alcools pour lesquels R représente une chaîne en $C_3$-$C_4$ et notamment l'isopropanol, le n-butanol, l'isobutanol et le tertiobutanol. Selon un mode de réalisation préféré de l'invention, l'alcool utilisé est l'isopropanol.

Selon l'invention l'alcool organique peut également être ajouté au mileu réactionnel sous la forme d'une solution dudit alcool dans l'acide sulfurique.

Le procédé de l'invention est effectué dans des conditions très douces à savoir sans apport extérieur de chaleur.

Selon un mode de réalisation préféré, la température initiale de la solution résiduaire d'acide sulfurique est comprise entre 10 et 50 °C, de préférence entre 15 et 35 °C et par exemple entre 20 et 26 °C.

Suite à l'addition de l'alcool organique à la solution d'acide sulfurique, on peut observer une montée en température. Celle-ci n'excède pas malgré tout les 90 °C.

Par exemple, la température du milieu réactionnel reste comprise entre 10 et 50 °C tout au cours de l'addition. Dans ce but on peut contrôler la vitesse d'addition de l'alcool organique tout en assurant une agitation efficace du milieu réactionnel.

Au besoin, des moyens de refroidissement pourront être utilisés, en vue de maintenir la température du milieu réactionnel entre 10 et 50 °C.

C'est la nature exothermique des réactions déclenchées lors de l'addition de l'alcool organique à la solution acide qui est responsable de l'éventuelle montée en température.

Les réactions mises en jeu lors de la réduction des substances azotées sont complexes et aboutissent principalement à la transformation des substances minérales azotées, solubilisées dans la solution résiduaire d'acide sulfurique, en substances azotées gazeuses se dégageant de la solution, par exemple sous forme de vapeurs d'oxyde nitreux ($N_2O$) contenant éventuellement de l'oxyde nitrique (NO).

Lorsque l'alcool organique utilisé est l'isopropanol et que les substances minérales azotées contenues dans la solution résiduaire d'acide sulfurique sont sous la forme d'acide nitrique, un mécanisme réactionnel a pu être proposé, lequel rend compte de la formation de $N_2O$ gazeux lors de la réduction de l'acide nitrique; les équations globales suivantes résument l'ensemble des réactions mises en jeu :

$CH_3$-$CH(CH_3)$-$OH$ + $2HNO_3$ → $CH_3$-$CO$-$COOH$ + $N_2O$ + $3H_2O$

$CH_3$-$CO$-$COOH$ + $HNO_3$ → $CH_3$-$COOH$ + $CO_2$ + $HNO_2$.

De façon plus détaillée, on peut supposer que la réduction de l'acide nitrique en oxyde nitreux procède via les réactions suivantes, les équations redox étant accompagnées des demi-équations correspondantes :

(a) $HNO_3$ + $CH_3$-$CH(CH_3)$-$OH$ → $HNO_2$ + $CH_3$-$CO$-$CH_3$ + $H_2O$

$$(HNO_3 + 2H^+ + 2e^- \rightarrow HNO_2 + H_2O$$

$$CH_3\text{-}CH(CH_3)\text{-}OH \rightarrow CH_3\text{-}CO\text{-}CH_3 + 2e^- + 2H^+)$$

(b) $CH_3$-$CO$-$CH_3$ + $HNO_2$ → $CH_3$-$CO$-$CH_2$-$NO$ + $H_2O$

(c) $CH_3$-$CO$-$CH_2$-$NO$ + $HNO_3$ → $CH_3$-$CO$-$CH_2$-$NO_2$ + $HNO_2$

$$(HNO_3 + 2H^+ + 2e^- \rightarrow HNO_2 + H_2O$$
$$CH_3\text{-}CO\text{-}CH_2\text{-}NO + H_2O \rightarrow CH_3\text{-}CO\text{-}CH_2\text{-}NO_2 + 2e^- + 2H^+)$$

(d) $CH_3\text{-}CO\text{-}CH_2\text{-}NO_2 + HNO_2 \rightarrow N_2O + CH_3\text{-}CO\text{-}COOH + H_2O$

$$(2HNO_2 + 4e^- + 4H^+ \rightarrow N_2O + 3H_2O$$
$$CH_3\text{-}CO\text{-}CH_2NO_2 + 2H_2O \rightarrow CH_3\text{-}CO\text{-}COOH + HNO_2 + 4e^- + 4H^+)$$

(e) $CH_3\text{-}CO\text{-}COOH + HNO_3 \rightarrow CH_3COOH + CO_2 + HNO_2$

$$(HNO_3 + 2e^- + 2H^+ \rightarrow HNO_2 + H_2O$$
$$CH_3\text{-}CO\text{-}COOH + H_2O \rightarrow CH_3COOH + CO_2 + 2e^- + 2H^+).$$

Il est clair néanmoins que cette interprétation de la réaction de réduction de l'acide nitrique en $N_2O$ par l'isopropanol n'est qu'une hypothèse des inventeurs et ne vise aucunement à limiter l'invention en excluant tout autre mécanisme de réduction conforme au procédé de l'invention.

Une estimation de la quantité minimale d'alcool organique nécessaire à la réduction des substances minérales azotées solubilisées dans la solution d'acide sulfurique est possible par potentiométrie. La réaction de réduction desdites substances minérales azotées par l'isopropanol s'apparente en effet à la réaction mise en jeu lors d'un titrage potentiométrique de type conventionnel.

Au point équivalent théorique correspond l'achèvement de la réaction.

Or celui-ci peut être facilement localisé expérimentalement à partir de la courbe correspondante de titration.

Aussi dans le cadre de l'invention, la quantité minimale d'alcool organique à ajouter peut elle être facilement déterminée en suivant l'évolution du potentiel du milieu réactionnel en fonction du volume d'alcool organique additionné.

De façon pratique on prélève un échantillon de la solution résiduaire d'acide sulfurique à traiter que l'on place dans une cellule électrochimique constituée d'une première électrode de référence au calomel ($Hg_2Cl_2$/Hg, KCl) et d'une seconde électrode indicatrice de platine.

Le potentiel initial de la solution est noté. Puis la variation du potentiel est représentée graphiquement en fonction de la quantité ajoutée d'alcool organique.

La courbe obtenue à l'allure classique des courbes de titrage d' oxydo-réduction. Elle se caractérise par une faible variation du potentiel avant et après le par une faible variation du potentiel avant et après le point équivalent, alors qu'au voisinage immédiat du point équivalent se développe un potentiel mixte instable et très variable. La détermination graphique du point équivalent est dès lors très aisée et se fait de façon classique à l'aide d'une des méthodes connues dans technique, à savoir la méthode de la diagonale, la méthode des cercles tangents, la méthode des tangentes ou la méthode de Gran.

La quantité d'alcool ajoutée au point équivalent pour le titrage de l'échantillon prélevé permet une juste évaluation de la quantité d'alcool minimale nécessaire à la réduction des substances azotées contenues dans la totalité de la solution résiduaire d'acide sulfurique.

Dans le cas où l'isopropanol est le réducteur utilisé on a pu déterminer de façon empirique que la quantité minimale nécessaire d'isopropanol correspond à 50% en poids de la quantité d'acide nitrique contenue dans la solution résiduaire d'acide sulfurique. On utilisera donc de préférence une quantité d'isopropanol comprise entre 50 et 100% en poids de la quantité d'acide nitrique.

Plus généralement, c'est-à-dire lorsque l'acide nitrique n'est pas la seule substance minérale azotée solubilisée dans la solution d'acide sulfurique, la quantité minimale d'isopropanol utilisée est inférieure. Avantageusement la quantité d'isopropanol est comprise entre 25 et 100% en poids de la quantité initiale totale d'azote minéral, exprimée en quantité équivalente d'acide nitrique, ladite quantité équivalente d'acide nitrique étant calculée en admettant que la totalité de l'azote minéral se trouve sous forme d'acide nitrique.

Selon un mode de réalisation particulier de l'invention, la solution d'acide sulfurique à traiter est placée à l'intérieur d'un réacteur étanche muni d'un système d'agitation efficace, d'un thermomètre, d'un moyen d'introduction de l'alcool organique, ainsi que d'un système d'évacuation des gaz.

En pratique, le procédé de l'invention est réalisé sous pression atmosphérique.

Les exemples suivants illustrent le procédé de traitement de l'invention et ne doivent en aucun cas être considérés comme limitatifs de la portée de celle-ci.

**Exemple 1** :

Cet exemple illustre la détermination de la quantité minimale d'isopropanol permettant la réduction de l'azote minéral contenu dans une solution d'acide sulfurique à 70% (en poids) comprenant 3% en poids d'acide nitrique.

200 g de la solution d'acide sulfurique à traiter, comprenant 3% d'acide nitrique, sont placés dans une cellule électrochimique constituée d'une électrode au calomel et d'une électrode de platine. L'addition d'isopropanol est réalisée à température ambiante et sous pression atmosphérique. Une agitation constante de la solution permet une homogénéisation du milieu réactionnel. L'évolution du potentiel de la solution est suivie en fonction de la quantité d'isopropanol ajoutée.

Une représentation graphique des variations du potentiel en fonction du volume d'isopropanol coulé permet la détermination du point équivalent (PE) et donc de la quantité minimale d'isopropanol assurant la réduction de l'acide nitrique initialement présent en solution.

Graphiquement on montre que le point équivalent (PE) correspond à un volume d'isopropanol compris entre 3,7 et 3,8 ml, soit 3,1 g d'isopropanol.

**Exemple 2** :

Cet exemple illustre la détermination de la quantité minimale d'isopropanol permettant la réduction de l'azote minéral contenu dans une solution résiduaire d'acide sulfurique contenant 11096 mg d'acide nitrique par kg de solution acide.

On procède pour ce faire de la même façon qu'à l'exemple 1, en partant de 200 g de la solution résiduaire d'acide sulfurique.

Le point équivalent correspond dans ce cas à un volume d'isopropanol de 1,55 ml, soit 1,24 g.

Les deux exemples 1 et 2 précédents montrent que la quantité minimale d'isopropanol devant être ajoutée correspond environ à 50% en poids de la quantité d'acide nitrique initialement présente en solution.

<u>Cas de l'exemple 1</u> :

. quantité initiale d'$HNO_3$ (g) = (200 x 3)/100 = 6
. quantité d'isopropanol au PE (g) = 3,1

<u>Cas de l'exemple 2</u> :

. quantité initiale d'$HNO_3$ (g) = (200 x 11,096)/1000 = 2,22
. quantité d'isopropanol au PE (g) = 1,24

**Exemple 3 :**

Dans cet exemple l'efficacité du procédé de traitement de l'invention a été étudiée en fonction du volume d'isopropanol ajouté eu égard aux quantités respectives d'acide nitreux et d'acide nitrique effectivement éliminées. La solution résiduaire traitée comprend de l'acide nitrique et de l'acide nitrosyl-sulfurique comme substances azotées solubilisées. Elle est caractérisée par des teneurs initiales respectives de $HNO_2$ et de $HNO_3$ de 7980 mg/kg et de 4050 mg/kg.

L'addition d'isopropanol est réalisée à température ambiante et sous pression atmosphérique. L'avancement de la réaction est suivie par potentiométrie et par détermination des quantités résiduelles de $HNO_2$ et de $HNO_3$ restant en solution. Les résultats obtenus ont été rassemblés dans le tableau suivant :

| Dose d'isopropanol (mg/kg) | 1 h | | | 2 h 30 | |
|---|---|---|---|---|---|
| | $HNO_2$ (mg/kg) | $HNO_3$ (mg/kg) | Potentiel (mV) | $HNO_2$ (mg/kg) | $HNO_3$ (mg/kg) |
| O | 7980 | 4050 | 947 | - | - |
| 400 | 7944 (0,4%) | 2807 (30,7%) | 972 | 7625 | 2609 |
| 2000 | 6229 (22%) | 0 (100%) | 934 | - | - |
| 4000 | 289 (96%) | 0 (100%) | 400 | - | - |

Les valeurs indiquées entre parenthèses correspondent à l'efficacité du procédé de traitement pour les quantités respectives d'isopropanol ajouté.

On remarque qu'après addition de 4000 mg/kg d'isopropanol, l'efficacité du procédé de l'invention eu égard à l'élimination de $HNO_3$ est de 100%, alors qu'elle est de 96% eu égard à l'élimination de $HNO_2$.

**Exemple 4** :

La même étude qu'à l'exemple 3 a été réalisée à partir de 100 g d'une solution d'acide sulfurique à 70% contenant 3% d'acide nitrique. Les températures de début et de fin d'addition sont rapportées dans le tableau suivant au côté des valeurs des potentiels Redox mesurées et des teneurs résiduelles en $HNO_3$ et $HNO_2$ obtenues, pour différentes quantités d'isopropanol ajouté.

| Dose d'isopropanol pour 100 g d'acide (g) | température du milieu réactionnel (C°) | 1/2 h de réaction | | | 1 h de réaction | | |
|---|---|---|---|---|---|---|---|
| | | Pot. Redox (mV) | $HNO_2$ (mg/kg) | $HNO_3$ (mg/kg) | Pot. Redox | $HNO_2$ (mg/kg) | $HNO_3$ (mg/kg) |
| 0 | --- | 1100 | --- | 30600 | --- | --- | --- |
| 1 g | 35 . 70 | 871 | 292 | 7483 (75,5%) | 871 mv | 182 | 7282(76 %) |
| 1,5 g | 26 . 86 | -- | 134 | 0 (100%) | 457 mv | --- | --- |
| 2 g | 26 . 85 | -- | 251 | 0 (100%) | 445 mv | --- | --- |

A nouveau l'efficacité du procédé eu égard à la quantité d'$HNO_3$ éliminée a été signalée entre parenthèses.

Dans ce cas après addition de 50% en poids de la quantité d'acide nitrique initialement présente, l'efficacité du procédé de traitement est de 100%.

Dans les exemples 5 à 7 suivants la quantité d'alcool organique ajoutée correspond à 50% de la quantité équivalente d'acide nitrique.

**Exemple 5** :

L'efficacité du procédé de traitement de l'invention utilisant l'isopropanol a été étudiée dans cet exemple à partir de différentes solutions d'acide sulfurique à teneurs variées en $HNO_3$, $HNO_2$ ou $HSO_3$-ONO. L'addition d'isopropanol est réalisée à température ambiante.

Les résultats obtenus ont été rassemblés dans les tableaux 1 à 4 suivants :

TABLEAU n° 1

| Solution A : acide sulfurique comprenant $HSO_3ONO$ et $HNO_3$. | | | |
|---|---|---|---|
| | $HNO_2$ (mg/kg) | $HNO_3$ (mg/kg) | **Remarques** |
| concentration initiale | 8400 | 5531 | --- |
| Concentration après traitement | 650 | 0 | $HNO_3$ non dosable Potentiel = 380 mV |
| Efficacité | 92% | 100% | --- |

TABLEAU n° 2

| Solution B : acide sulfurique à 70% contenant majoritairement de l'acide nitrique. | | | |
|---|---|---|---|
| | $HNO_2$ (mg/kg) | $HNO_3$ (mg/kg) | **Remarques** |
| concentration initiale | 50 | 31500 | --- |
| Concentration après traitement | 53 | 0 | $HNO_3$ non dosable Potentiel = 690 mV |
| Efficacité | --- | 100% | --- |

TABLEAU n° 3

| Solution C : acide sulfurique à 70% contenant majoritairement de l'acide nitreux. | | | |
|---|---|---|---|
| | $HNO_2$ (mg/kg) | $HNO_3$ (mg/kg) | **Remarques** |
| concentration initiale | 19700 | 1025 | --- |
| Concentration après traitement | 388 | 0 | $HNO_3$ non dosable Potentiel = 408 mV |
| Efficacité | 92% | 100% | --- |

TABLEAU n° 4

| Solution D : acide sulfurique à 94% à teneur élevée en $HNO_2$. | | |
|---|---|---|
| Concentrations | $HNO_2$ (mg/kg) | $HNO_3$ (mg/kg) |
| Départ | 30300 | 0 |
| Après traitement | 4640 | 0 |
| Efficacité | 85% | - |

**Exemple 6** :

Dans cet exemple le procédé de traitement de l'invention a permis l'élimination de $HSO_3ONO$ de solutions résiduaires d'acide sulfurique provenant d'un procédé de nitration du cumène. Le réducteur utilisé est à nouveau l'isopropanol. La température du milieu réactionnel a été relevée tout au cours de l'addition d'isopropanol.

Le tableau suivant résume l'ensemble des résultats obtenus.

| T. du milieu réactionnel (° C) | 0h | $HNO_3$ 1/2h | (mg/kg) 1h | $HNO_2$ 0h | (mg/kg) 0,5h | Pot. redox (mv) |
|---|---|---|---|---|---|---|
| 24 → 32 | 11096 | 488(96%) | 608(95%) | 0 | - | 762 |
| 20 → 28 | 4452 | 0(100%) | - | 2400 | 189(92%) | 408 |

L'efficacité du procédé de traitement est indiquée entre parenthèses.

**Exemple 7** :

Dans cet exemple l'efficacité du procédé de traitement de l'invention a été étudiée dans le cas de différents alcools réducteurs.

Dans le tableau suivant figurent pour chaque type de réducteur, la nature de l'acide sulfurique traité, les concentrations initiales et finales d'$HNO_2$ et $HNO_3$, ainsi que les températures du milieu réactionnel en début et fin d'addition.

L'efficacité du procédé de traitement a été précisée dans chaque cas entre parenthèses.

Il résulte de ces diverses expériences que l'isopropanol, le n-butanol, tertiobutanol et le propanediol peuvent être utilisés indifféremment comme réducteur dans le procédé de l'invention.

Les excellents résultats observés dans le cas de l'isopropanol sont d'autant plus remarquables que la réduction des substances azotées a lieu à température ambiante.

| Réducteur utilisé | Acide traité | Concentrations initiales HNO$_2$ (mg/kg) | HNO$_3$ (mg/kg) | Concentrations finales HNO$_2$ (mg/kg) | HNO$_3$ (mg/kg) | Température du milieu réactionnel |
|---|---|---|---|---|---|---|
| Isopropanol | $H_2SO_4$ 70%+$HNO_2$ | 19700 | 1025 | 388 (98%) | 0 (100%) | 20 → 34°C |
| n-butanol | $H_2SO_4$ 70%+$HNO_2$ + $HNO_3$ | 13600 | 19500 | 274 (98%) | 0 (100%) | 20 → 62°C |
| isobutanol | $H_2SO_4$ 70%+$HNO_2$ + $HNO_3$ | 13600 | 19500 | 270 (98%) | 0 (100%) | 20 → 72°C |
| tertiobu-tanol | $H_2SO_4$ 70%+$HNO_2$ + $HNO_3$ | 13600 | 19500 | 400 (97%) | 0 (100%) | 20 → 72°C |
| propane diol | $H_2SO_4$ 70%+$HNO_2$ + $HNO_3$ | 13600 | 19500 | 5444 (60%) | 0 (100%) | 20 → 52°C |

## Revendications

**1.** Procédé de traitement, destiné à réduire la teneur en azote minéral d'une solution résiduaire d'acide sulfurique, consistant à ajouter à ladite solution un alcool organique mono- ou poly-hydroxylé à chaîne

hydrocarbonée en $C_3$-$C_8$, de façon à réduire tout ou partie des substances résiduelles minérales azotées, solubilisées dans la solution d'acide sulfurique, ledit procédé étant caractérisé en ce que la réduction est effectuée sans apport extérieur de chaleur.

**2.** Procédé selon la revendication 1, caractérisé en ce que ledit procédé est effectué sous pression atmosphérique.

**3.** Procédé selon l'une quelconque des revendications 1 à 2, caractérisé en ce que la température réactionnelle initiale de la solution résiduaire d'acide sulfurique est comprise entre 10 et 50 ° C.

**4.** Procédé selon l'une quelconque des revendications 1 à 3, caractérisé en ce que la température réactionnelle initiale est comprise entre 15 et 35 ° C et notamment entre 20 et 26 ° C.

**5.** Procédé selon l'une quelconque des revendications 1 à 4, caractérisé en ce que la température de la solution résiduaire d'acide sulfurique reste comprise entre 10 et 50 ° C tout au long de l'addition de l'alcool organique.

**6.** Procédé selon l'une quelconque des revendications 1 à 5, caractérisé en ce que l'alcool organique a pour formule ROH dans laquelle R est une chaîne alkyle linéaire ou ramifiée en $C_3$-$C_5$ et de préférence en $C_3$-$C_4$.

**7.** Procédé selon l'une quelconque des revendications 1 à 6, caractérisé en ce que l'alcool organique est choisi parmi l'isopropanol, le n-butanol, l'isobutanol et le tertiobutanol.

**8.** Procédé selon l'une quelconque des revendications 1 à 7, caractérisé en ce que l'alcool organique est l'isopropanol.

**9.** Procédé selon la revendication 8, caractérisé en ce que la quantité d'isopropanol ajoutée à la solution d'acide sulfurique est comprise entre 25% et 100% en poids de la quantité initiale d'azote minéral exprimée en quantité équivalente d'acide nitrique, ladite quantité équivalente d'acide nitrique étant calculée en admettant que la totalité de l'azote minéral se trouve sous forme d'acide nitrique.

**10.** Procédé selon l'une quelconque des revendications 1 à 9, caractérisé en ce que les substances résiduelles minérales azotées solubilisées dans la solution d'acide sulfurique, présentent un atome d'azote à l'état d'oxydation + III ou + V.

**11.** Procédé selon la revendication 10, caractérisé en ce que les substances minérales azotées sont l'acide nitrique ($HNO_3$), l'acide nitreux ($HNO_2$), l'acide nitrosyl-sulfurique ($HSO_3ONO$) ou un mélange de ceux-ci dans des proportions quelconques.

**12.** Procédé selon l'une quelconque des revendications 1 à 11, caractérisé en ce que les substances résiduelles minérales azotées solubilisées dans la solution d'acide sulfurique consistent essentiellement en un mélange d'acide nitrique et de substances minérales azotées présentant un atome d'azote à l'état d'oxydation + III dans des proportions quelconques.

**13.** Procédé selon l'une quelconque des revendications 1 à 11, caractérisé en ce que les substances minérales résiduelles azotées solubilisées dans la solution d'acide sulfurique consistent essentiellement en acide nitrique ($HNO_3$).

**14.** Procédé selon l'une quelconque des revendications 1 à 11, caractérisé en ce que les substances minérales résiduelles azotées solubilisées dans la solution d'acide sulfurique consistent essentiellement en substances minérales azotées présentant un atome d'azote à l'état d'oxydation + III,

**15.** Procédé selon l'une quelconque des revendications 1 à 14, caractérisé en ce que la teneur résiduelle en azote minéral de la solution d'acide sulfurique à traiter est inférieure à 20 g par kg de solution d'acide sulfurique.

**16.** Procédé selon la revendication 13, caractérisé en ce que la teneur résiduelle en acide nitrique est inférieure à 90 g par kg de solution d'acide sulfurique.

**17.** Procédé selon la revendication 14, caractérisé en ce que la teneur résiduelle en substances minérales azotées présentant un atome d'azote à l'état d'oxydation +III, exprimée en quantité équivalente d'acide nitreux est inférieure à 60 g par kg de solution d'acide sulfurique.

**18.** Procédé selon la revendication 8, caractérisé en ce que les substances résiduelles minérales azotées solubilisées dans la solution d'acide sulfurique consistent essentiellement en acide nitrique et en ce que la quantité d'isopropanol ajoutée à la solution d'acide sulfurique est comprise entre 50 et 100% en poids de la quantité d'acide nitrique initialement présente en solution.

**19.** Procédé selon les revendications 1 à 18, caractérisé en ce que l'alcool organique est ajouté sous la forme d'une solution dudit alcool orqanique dans l'acide sulfurique.

Office européen des brevets

# RAPPORT DE RECHERCHE EUROPEENNE

Numero de la demande
EP 95 40 1160

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE-A-28 31 941 (BASF AG)<br>* revendication 1 * | 1 | C01B17/94 |
| A | US-A-5 030 436 (STEADMAN ET AL)<br>* revendication 1 * | 1 | |
| A | DATABASE WPI<br>Week 9043<br>Derwent Publications Ltd., London, GB;<br>AN 90-324970<br>& JP-A-02 233 124 (HITACHI ZOSEN CORP) ,<br>14 Septembre 1990<br>* abrégé * | 1 | |

DOMAINES TECHNIQUES RECHERCHES (Int.Cl.6)
C01B

Le présent rapport a été établi pour toutes les revendications

| Lieu de la recherche | Date d'achèvement de la recherche | Examinateur |
|---|---|---|
| BERLIN | 12 Septembre 1995 | Clement, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant